# EUROPÄISCHE PATENTANMELDUNG

(11) **EP 1 073 189 A2**
(43) Veröffentlichungstag der Anmeldung: **31.01.2001**
(21) Anmeldenummer: 00113988.0
(22) Anmeldetag: 01.07.2000
(51) Int. Cl.: H02M 7/06, H02M 7/155

(54) **Kondensatornetzteil mit verbrauchsabhängig gesteuerter Konstantstromeinspeisung**

(30) Priorität: 24.07.1999 DE 19934850
(71) Anmelder: Diehl Controls Nürnberg GmbH & Co. KG, 90451 Nürnberg (DE)
(72) Erfinder: Fluhrer, Henry, 90489 Nürnberg (DE)
(74) Vertreter: Hofmann, Gerhard, Dipl.-Ing. Patentassessor

(57) **Zusammenfassung**

Bei einem Kondensatornetzteil, daß einer Verbraucherschaltung mit unterschiedlichem Strombedarf einen Konstantstrom aufprägt, wird eine weitere Energieeinsparmöglichkeit dadurch realisiert, daß der der Verbraucherschaltung aufgeprägte Konstantstrom über eine variable schaltbare Gesamtkapazität des Kodensatornetzteiles verbrauchsabhängig steuerbar ist und somit in die Verbraucherschaltung ein Konstantstrom verschiedener Größe bedarfsabhängig eingespeist werden kann.

## Beschreibung

Die Erfindung betrifft ein Kondensatornetzteil entsprechend dem Oberbegriff des Anspruches 1.

Um in Zukunft besonders energieeinsparende Haushaltsgeräte, zum Beispiel Herde mit Herdschaltuhren, bauen zu können, soll für diese Gerate eine weitere Energieeinsparmöglichkeit durch eine einfache und kostengünstige, zum Beispiel schaltungstechnische, Lösung realisiert werden, die insbesondere einen geringen Änderungsaufwand für die neue Gesamtkonzeption des Haushaltsgerates nach sich zieht. Die Energieeinsparung soll sich zum einen beim Nutzer des Haushaltsgerätes in einer geringeren Stromrechnung niederschlagen, dies bedeutet eine Reduzierung der Wirkleistungsaufhahme, zum anderen soll aber auch eine Reduzierung der Blindleistungsaufnahme im Gerät erfolgen, was für den Energieversorger eine Verringerung der insgesamt bereitgestellten Energie bedeuten würde. Laborversuche haben gezeigt, daß gleichzeitige Reduzierung von Wirk- und Blindleistungsaufnahme den Energieverbrauch insgesamt am wirksamsten senkt.

Es ist bekannt Schaltgerate, zum Beispiel für Herdschaltuhren, mit einem festen Konstantstrom aus einem Kondensatornetzteil zu versorgen. Bei stabiler Netzspannung bestimmt im wesentlichen die dem Gleichrichter vorgeschaltete Kapazität eines Kondensators die Größe des Stromes, welche dem/den Verbraucher(n) zugeführt wird. Dieser Strom ist über einen großen Bereich des Spannungsabfalls am gesamten Lastwiderstand der Herdschaltuhr, welcher z. B. aus Displayheizung und Mikrocontroller gebildet wird, konstant. Der vom Kondensatornetzteil eingespeiste Konstantstrom ist so bemessen, daß er, unabhängig vom Strombedarf der Verbraucher, fest für den maximalen Belastungsfall ausgelegt ist. D. h. auch wenn einzelne Verbraucher abgeschaltet sind, wird immer noch der für den maximalen Belastungsfall ausgelegte Konstantstrom eingespeist. Mit zunehmend kleiner werdenden Lasten wird die Blindkomponente des eingespeisten Konstantstromes, der ein Scheinstrom ist, größer. Dieser Scheinstrom muß über eine Ersatzlast, die zusätzlich vorzusehen ist, abfließen können, Folglich ist eine permanente Leistungsaufnahme erforderlich. Dies wirkt sich in der energetischen Gesamtbilanz sehr nachteilig aus, denn der Energieversorger muß einen gleichbleibenden Betrag an Energie unabhängig davon bereitstellen, ob der Verbraucher nun diese bereitgestellte Energie für sich vollständig nutzbringend wandelt oder teilweise nicht nutzbringend, z. B. an Vorwiderständen umsetzt bzw. an Ersatzlasten abfließen läßt.

Aus DE 36 05 658 C3 ist ein elektronisches Schaltgerät bekannt, welches mit einer Steuerschaltung und einem Kondensatornetzeil einer Verbraucherschaltung einen Strom aufträgt. Dieser Konstantstrom ist auch für jeden Belastungsfall nach dem Strombedarf des größten Verbrauchers fest bemessen, aber durch schaltungs- und steuerungstechnische Maßnahmen auf der Verbraucherseite konnte der maximal einzuspeisende Konstantstrom reduziert werden. Dies bedeutet, zumindest gegenüber bisherigen Lösungen, eine Energieeinsparung im maximalen Belastungsfall. Energetisch nachteilig an dieser Ausführung ist, daß im Fall des Abschaltens/Herunterfahrens der Verbraucher mit dem größeren Strombedarf, zum Beispiel der Displayheizung, ein dauerbetriebener Verbraucher kleinen Strombedarfs, zum Beispiel ein Mikrocontroller, mit einem viel zu großen Konstantstrom betrieben wird, der dann beispielsweise durch Vorwiderstände begrenzt werden muß. Die energetische Gesamtbilanz wird dabei um so schlechter, je größer die Differenz des Strombedarfs zwischen kleinstem und größtem Stromverbraucher ist und je länger der Betrieb des kleinsten Stromverbrauchers mit dem für den größten Stromverbraucher bemessenen Konstantstrom andauert.

Aufgabe der Erfindung ist es, ein Kondensatornetzteil der eingangs genannten Art als Konstantstromquelle derart vorzusehen, daß sich die Größe des eingespeisten Konstantstromes zumindest am minimalen Strombedarf aller dauerbetriebenen Verbraucher und am maximalen Strombedarf aller eingeschalteten Verbraucher orientiert.

Erfindungsgemäß wird die oben genannte Aufgabe bei einem Kondensatornetzteil durch schaltungs- und steuerungstechnische Maßnahmen mit dem Merkmalen des Anspruches 1 gelöst.

Die verbrauchsabhängige Einspeisung von Konstantstrom durch Steuerung der Gesamtkapazitat des Kondensatornetzteiles stellt ein wirksames Mittel zur Energieeinsparung durch gleichzeitige Reduzierung von Wirk- und Blindleistungsaufnahme dar. Vorteilhaft an der Erfindung ist, daß die ohnehin in einer elektronisch betriebenen Herdschaltuhr vorhandene Steuereinheit, zum Beispiel ein Mikrocontroller, für eine weitere Steuerfunktion genutzt wird. Gemäß einer Weiterbildung der Erfindung ist der schaltungstechnische Aufwand bezüglich der bevorzugten Ausführungsform eher gering. Aufgrund der unterschiedlichen Betriebsdauer verschiedener Verbraucherzustände (täglich schätzungsweise 2 Stunden voller Lastbetrieb und 22 Stunden minimaler Lastbetrieb) ist es ausreichend, die steuerbare Gesamtkapazität des Kondensatornetzteiles so zu gestalten, daß zwei Konstantstromwerte verbraucherabhängig eingestellt werden können. Im minimalen Belastungsfall, durch den dauerbetriebenen Mikrocontroller und die herunter gefahrene Heizung des Displays, müssen diese Verbraucher mit einem minimal notwendigen Konstantstrom versorgt werden. Im maximalen Belastungsfall, d. h. wenn alle Verbraucher eingeschaltet sind, muß ein maximal notwendiger Konstantstrom bereitgestellt werden.

Die o. g. Ausführungsform ist auch hinsichtlich der Kosten, zum Beispiel für zusätzlich Bauelemente, zu bevorzugen. Bei der Kondensatorserienschaltung muß nur der Kondensator 4 als X2 Kondensator, d. h. als geprüfter netzspannungsfester Kondensator, ausgeführt sein.

Hingegen sind bei der parallelen Schaltungsvariante der Kondensatoren gemäß einer anderen Weiterbildung der Erfindung beide Kondensatoren als X2 Kondensatoren auszuführen. Diese Lösung ist, als schaltungstechnische Variante der bevorzugten Ausführungsform, auch mit geringem Aufwand realisierbar, aber teurer.

Weitere vorteilhafte Ausgestaltungen der Erfindung, insbesondere die kondensatorgrößenunabhängige Anpassung an jeden gewünschten Konstantstrom, sowie die Bereitstellung von mehr als zwei festen Konstantstromwerten, je nach gewünschter Abstufungszahl des bereitzustellenden Konstantstromes, als auch die Substitution von Schaltmitteln sind möglich und in den weiteren Unteransprüchen beschrieben.

Ausführungsbeispiele der Erfindung sind in den Zeichnungen dargestellt und werden im folgenden näher beschrieben. Es zeigen:
- Figur 1:: das Schaltungsprinzip der bevorzugten Ausführungsform,
- Figur 2:: das Schaltungsprinzip einer alternativen Ausführungsform zu Figur 1,
- Figur 3:: das Schaltungsprinzip einer dritten Ausführungsform, die Merkmale der Fig. 1 und 2 aufweist,
- Figur 4:: das Schaltungsprinzip einer weiteren Ausführungsform, die eine größere Abstufbarkeit des Konstantstromes als Fig. 1, 2 und 3 aufweist,
- Figur 5:: das Schaltungsprinzip einer weiteren Ausführungsform mit einem anderen Schaltmittel.

Bei einem Kondensatornetzteil 1, bestehend aus einem Widerstand 2 vor einer Gesamtkapazitat 3, bestehend aus einer fest vorgegebenen Teilkapazität 4 und einer steuerbaren Teilkapazität 5, sowie einem Zweiweggleichrichter 6, liegt eingangsseitig eine über weite Bereiche stabile Netzspannung von 230 Volt ∼. Ausgangsseitig liegt eine Verbraucherschaltung, bestehend aus einem dauerbetriebenen Mikrocontroller 7 kleinen Stromverbrauchs und einem festen oder veränderbaren Widerstand 8, der die gesamte (veränderliche) Last großen Stromverbrauchs darstellt, in die vom Kondensatornetzteil ein Konstantstrom i eingespeist wird, der sich im wesentlichen durch die variabel schaltbare Gesamtkapazität 3 bestimmt.

Die Gesamtkapazität 3 muß im minimalen Belastungsfall, bei dem nur der Mikrocontroller 7 und eine heruntergefahrene Displayheizung 8 in Betrieb sind und diese Verbraucher hierzu eines minimalen Stromes bedürfen, verkleinert werden; dies geschieht dadurch, daß der zum Kondensator 5 parallel liegende Triac 9 durch ein entsprechendes Signal des Mikrocontrollers hochohmig gehalten wird und somit ein minimaler Konstantstrom in die Verbraucherschaltung 7, 8 eingespeist werden kann. Die Gesamtkapazität 3 muß hingegen im maximalen Belastungsfall, bei dem alle Verbraucher in Betrieb sind und diese Verbraucher hierzu eines maximalen Stromes bedürfen, vergrößert werden; dies geschieht dadurch, daß der zum Kondensator 5 parallel liegende Triac 9 durch ein entsprechendes Signal des Mikrocontrollers niederohmig gehalten wird und somit ein maximaler Konstantstrom i in die Verbraucherschaltung 7, 8 eingespeist werden kann.

Es ist somit erkennbar, daß der Verbraucherschaltung 7, 8 nur der Konstantstrombetrag zugeführt werden soll, den sie abhängig vom aktuellen Betriebs- bzw. Schaltzustand auch benötigt, d. h. bei kleinem Strombedarf der Verbraucher wird die im wesentlichen strombestimmende Gesamtkapazität 3 verkleinert und damit auch der eingespeiste Konstantstrom i minimiert. Hingegen wird bei maximalem Strombedarf der Verbraucher die im wesentlichen strombestimmende Gesamtkapazität 3 vergrößert und damit auch der eingespeiste Konstantstrom i maximiert. Die Gesamtkapazität 3 muß demzufolge variabel schaltbar sein, dies wird zum Beispiel durch Zusammenschaltung zweiter Teilkapazitäten, von denen mindestens eine Teilkapazität variabel ist, in Serie realisiert. Aus der Eigenschaft der Kondensatorserienschaltung, daß die Gesamtkapazität der in Serie geschalteten Kodensatoren kleiner als die Teilkapazität des größten Kondensators der Serienschaltung ist, folgt, daß zum Beispiel der größte Kondensator als feste Teilkapazität gewählt werden kann, denn diese feste Teilkapazität bestimmt den maximal eingespeisten Strom i im maximalen Betriebsfall, wenn gleichzeitig der kleinere Kondensator durch entsprechende Beschaltung und Ansteuerung überbrückt wird. Die Gesamtkapazität kann hingegen minimiert werden, wenn dafür gesorgt wird, daß sich die Leitwerte beider Teilkapazitäten addieren. Dies laßt sich in diesem Fall schaltungstechnisch dadurch realisieren, daß die variable Teilkapazität nicht mehr überbrückt wird, sie muß demzufolge vom Mikrocontroller 7 entsprechend angesteuert werden.

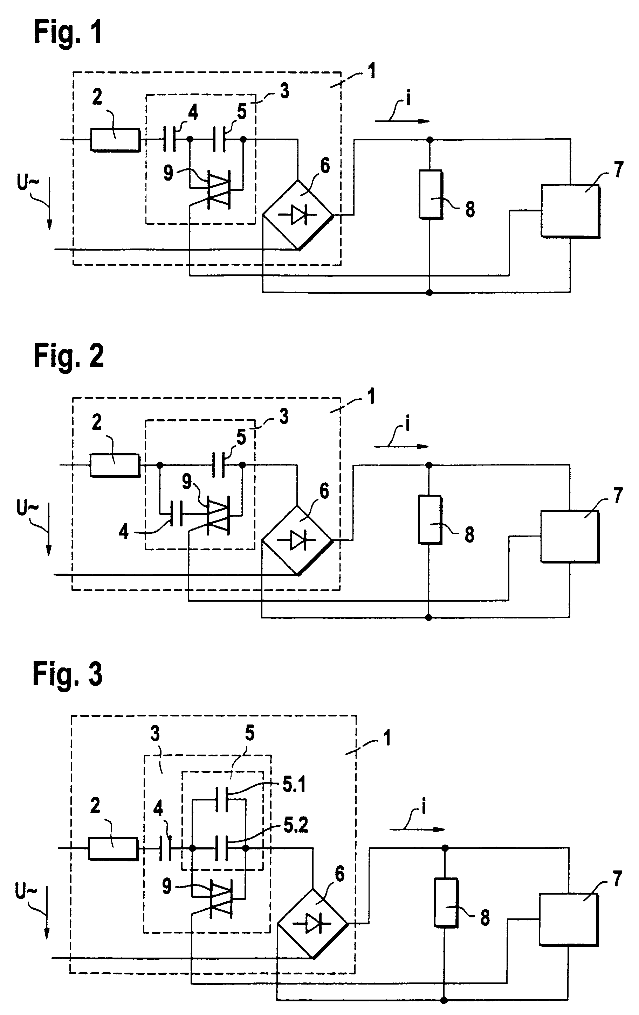

Figur 2 stellt eine alternative Schaltvariante dar. Im Unterschied zu Figur 1 wird die Gesamtkapazität 3 durch zwei parallel liegende Teilkapazitäten 4 und 5 gebildet. In dieser Schaltung ist der Kondensator 4 als steuerbare Teilkapazität, durch einen zu ihm in Serie liegenden Triac 9 ausgebildet, der Kondensator 5 ist als feste Teilkapazität vorgegeben. Wird der Triac 9 durch entsprechende Ansteuerung des Mikrocontrollers 7 hochohmig gehalten, verringert sich die Gesamtkapazität 3 der Schaltung und damit ist der in die Verbraucherschaltung eingespeiste Konstantstrom i minimiert. Wird der Triac 9 andernfalls niederohmig gehalten, vergrößert sich die Gesamtkapazitat 3 und der eingespeiste Konstantstrom i erreicht einen Maximalwert.

Figur 3 demonstriert an einer dritten Ausführungsform, daß sowohl die festen als auch die steuerbaren Teilkapazitäten 4 und 5, durch beliebig geartete Zusammenschaltung von Kondensatoren 5.1 und 5.2 beliebiger Größe in Serien- und/oder Parallelschaltung gebildet werden können. Hierbei können zum einen Kondensatoren beliebiger Größe Verwendung finden, zum anderen ist aber auch jeder gewünschte Konstantstrom als Minimal- und/oder Maximalwert einstellbar.

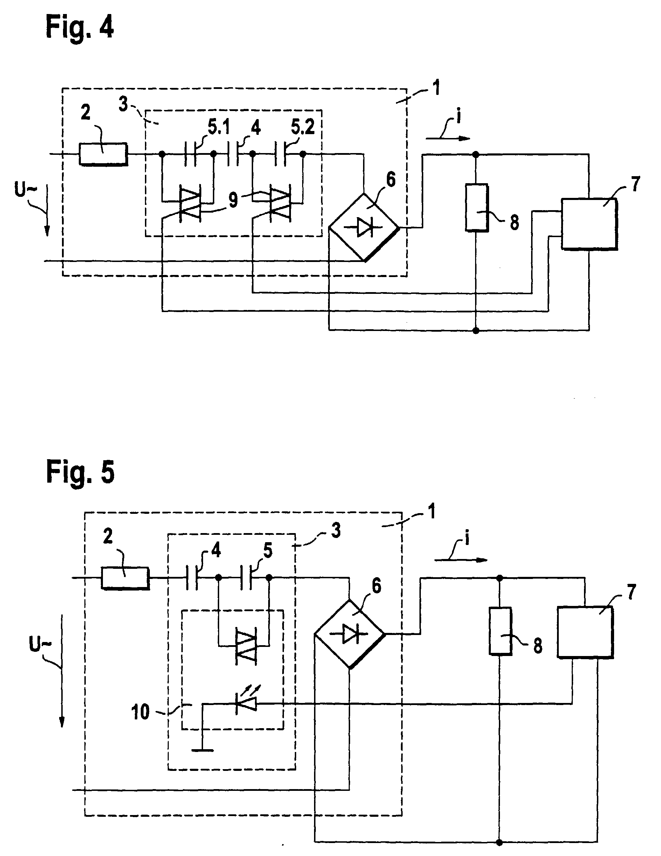

Figur 4 demonstriert eine weitere Ausführungsform, wobei die Gesamtkapazität 3 in insgesamt drei Abstufungen (Kondensatoren 4, 5.1, 5.2) schaltbar ist und damit auch der Verbraucherschaltung 7, 8 ein Konstantstrom i in drei vorgebbaren Werten zugeführt werden kann.

Figur 5 zeigt schließlich noch eine weitere Ausführungsform des Schaltungsprinzipes. Hierbei wird, zum Beispiel der in Figur 1 als Schaltmittel verwendete Triac 9, durch ein adäquates Schaltmittel, zum Beispiel einen Optokoppler 10, der auch vom Mikrocontroller 7 ansteuerbar ist, ersetzt.

Der Widerstand 2 hat in allen Darstellungen die Funktion eines Sicherungswiderstandes.

Der Zweiweggleichrichter 6 sorgt in allen Fällen dafür, daß die Verbraucherschaltung 7, 8 sowohl während der positiven als auch der negativen Halbwelle immer vom Konstantstrom i in der gleichen Richtung durchflossen wird.

## Patentansprüche

1. Kondensatornetzteil mit einem einem Zweiweggleichrichter vorgeschalteten Kondensator und einem Widerstand, die eine Konstantstromquelle zur Speisung von zwei oder mehr Verbrauchern bilden, wobei letztere je nach Schalt- bzw. Betriebszustand unterschiedlich Strom aufnehmen, wobei ein als Steuerelement ausgebildeter Verbraucher, vorzugsweise ein Mikrocontroller immer einen Mindeststrom für seinen Betrieb benötigt, und wobei ferner der Strom der Konstantstromquelle abhängig vom Strombedarf der Verbraucher geschalten wird,
dadurch gekennzeichnet,
daß zur Anpassung an den Strombedarf die wenigstens zwei Kondensatoren aufweisende Gesamtkapazität variabel durch das Steuerelement schaltbar ist.

2. Kondensatornetzteil nach Anspruch 1,
dadurch gekennzeichnet,
daß die Gesamtkapazität (3) aus zwei in Serie liegenden Kondensatoren (4) und (5) gebildet wird, dabei zum Kondensator (4) als Schaltmittel ein Triac (9) parallel liegt, welches vom Mikrocontroller (7) derart angesteuert wird, daß entweder der Triac (9) hochohmig gehalten wird, wenn der Verbraucherschaltung ein minimaler Konstantstrom zugeführt werden soll oder der Triac (9) niederohmig gehalten wird, wenn der Verbraucherschaltung ein maximaler Konstantstrom zugeführt werden soll.

3. Kondensatornetzteil nach Anspruch 1,
dadurch gekennzeichnet,
daß die Gesamtkapazität (3) aus zwei parallel liegenden Kondensatoren (4) und (5) gebildet wird, dabei zum Kondensator (4) als Schaltmittel ein Triac (9) in Serie liegt, welches vom Mikrocontroller (7) derart angesteuert wird, daß entweder der Triac (9) hochohmig gehalten wird, wenn der Verbraucherschaltung ein minimaler Konstantstrom zugeführt werden soll oder der Triac (9) niederohmig gehalten wird, wenn der Verbraucherschaltung ein maximaler Konstantstrom zugeführt werden soll.

4. Kondensatornetzteil nach einem der vorhergehenden Ansprüche,
dadurch gekennzeichnet,
daß die die Gesamtkapazität (3) bildenden Kondensatoren (5) und (4) jeweils aus einer beliebigen Zusammenschaltung von verschieden großen Kondensatoren in Serien- und/oder Parallelschaltung gebildet werden können.

5. Kondensatornetzteil nach einem der vorhergehenden Ansprüche,
dadurch gekennzeichnet,
daß mehr als zwei Kondensatoren die Gesamtkapazität (3) bilden und dabei mehr als ein Kondensator mit ansteuerbaren Schaltmitteln in Serien- und/oder Parallelschaltung beschaltet ist und die Zusammenschaltung derart in Serien- und/oder Parallelschaltung erfolgt, daß der Verbraucherschaltung in jeder gewünschten Abstufung ein Konstantstrom i jeder gewünschten Größe zugeführt werden kann.

6. Kondensatornetzteil nach einem der vorhergehenden Ansprüche,
dadurch gekennzeichnet,
daß der/die als Schaltmittel verwendete(n) Triac(s) (9) durch jedes andere ansteuerbare Schaltelement, z. B. durch (einen) Optokoppler (10), ganz oder teilweise ersetzt werden können.
